# FASCICULE DE BREVET EUROPEEN

(11) **EP 0 931 803 B1**
(45) Date de publication et mention de la délivrance du brevet: **09.06.2004**
(21) Numéro de dépôt: 98403277.1
(22) Date de dépôt: 23.12.1998
(51) Int. Cl.: C08G 59/50, C08L 63/00

(54) **Compositions de polymères, leurs préparations et leurs utilisations**
Polymerzusammensetzungen, Ihre Herstellung und ihre Verwendung
Polymer compositions, their preparation and their use

(30) Priorité: 22.01.1998 FR 9800757
(43) Date de publication de la demande: 28.07.1999
(73) Titulaire: Institut Français du Pétrole, 92852 Rueil-Malmaison Cedex (FR)
(72) Inventeur: Camberlin, Yves, 69300 Caluire (FR); Grenier, Jacky, 38141 Vignieu (FR); Vallet, Jacques, 69008 Lyon (FR); Bonnet, Anthony, 38510 Passins (FR); Pascault, Jean-Pierre, 69100 Villeurbanne (FR); Taha, Mohamed, 34830 Clapiers (FR)

(56) Documents cités:
- EP-A- 0 745 640
- EP-A- 0 833 036

## Description

Dans le cadre d'une étude sur les revêtements des pipelines, la demanderesse s'est intéressée à des compositions de polymères. Suite à ce travail, des compositions particulièrement intéressantes pour les revêtements, notamment extemes, des pipelines ont été retenues, ces compositions contenant au moins un polymère thermoplastique thermostable, amorphe ou faiblement cristallin, et au moins une résine époxyde modifiée.

La présente invention concerne des compositions de polymères, un procédé pour la synthèse de ces compositions. Elle concerne aussi les utilisations de ces compositions notamment pour le revêtement des canalisations, notamment le revêtement des pipelines, pour l'obtention de pré-imprégnés pour la fabrication de matériaux composites, pour l'obtention d'adhésifs et de mastics, notamment destinés à la réhabilitation de puits pétroliers ou géothermiques ou plus généralement de toutes excavations.

En effet, les pipelines sont des tubes métalliques, souvent en acier, essentiellement utilisés dans les forages pour transporter le pétrole brut et le gaz naturel, mais on peut aussi envisager de transporter toutes sortes de fluides au moyen de ces pipelines. Le pipeline subit une corrosion sur sa surface interne par le fluide transporté. Lorsque le fluide transporté est du pétrole, les composés soufrés contenus dans le pétrole sont les principaux responsables de la corrosion. Lorsque le forage est effectué en mer (forage "off-shore"), le pipeline subit en plus sur sa surface externe une corrosion par l'eau de mer. Le traitement de la surface des canalisations a déjà été décrit dans l'art antérieur. Par exemple le brevet US-A-5 447 798 décrit une canalisation en béton sur laquelle on dépose une couche intermédiaire qui est un mélange de résine époxyde modifiée par un polysulfure et de béton, puis une couche de résine époxyde modifiée par un polysulfure.

Le principal problème rencontré quand on veut déposer un polymère sur une surface métallique, par exemple sur la surface externe et/ou interne d'un pipeline, par exemple en acier, est la tenue du polymère lorsqu'il est soumis à des contraintes d'ordre thermique. En effet, même si on refroidit le pétrole avant de le transporter, le pipeline est souvent porté à une température d'environ 50 à 200 °C par contact avec le pétrole chaud. Certains polymères, par exemple le polypropylène, ont tendance à se déformer et à ne plus adhérer au métal dès qu'on le porte à une température supérieure à 130 °C. D'autres polymères, comme les polyétherimides ou les polysulfones, adhèrent à hautes températures, mais leur température de mise en oeuvre (de dépôt sur le métal) est alors plus élevée, environ 360 °C. Or les métaux, et notamment l'acier, peuvent présenter des déformations de phases à partir d'une température d'environ 250 °C et certaines de leurs propriétés mécaniques et physiques peuvent être modifiées.

D'autre part, une bonne adhérence du polymère à plus haute température permet de transporter le pétrole sans qu'il soit nécessaire de le refroidir ou tout au moins en le soumettant à un refroidissement moins important. Or, à une température relativement élevée, le pétrole est moins visqueux, donc plus facile à transporter.

Les critères auxquels devaient répondre les compositions de polymères recherchées sont une température de mise en oeuvre de dépôt sur l'acier telle que l'acier ne subisse pas de modifications ainsi qu'une bonne adhérence à l'acier.

La présente invention concerne une composition de polymères qui permet de s'affranchir des inconvénients précités. La composition de polymères selon la présente invention a une température de mise en oeuvre du dépôt sur l'acier d'environ 180 à 250 °C, dans cet intervalle de température, l'acier présente une bonne tenue mécanique. La composition de polymères selon la présente invention présente une adhérence - notamment à l'acier - particulièrement bonne, une bonne rigidité, une bonne tenue à l'eau de mer. En outre, ces qualités ne sont pas substantiellement altérées lorsque ces compositions sont soumises au vieillissement.

Les compositions de polymères selon la présente invention contiennent au moins un polymère thermoplastique thermostable, de préférence amorphe, et au moins une résine époxyde modifiée par au moins une polyamine aromatique, de préférence encombrée. De préférence, le polymère thermoplastique thermostable représente environ 15 à 98 %, et, de manière encore plus préférée, de 35 à 80 %, en masse par rapport à la masse totale de la composition ; de préférence, la résine époxyde modifiée représente environ 2 à 85 %, et, de manière encore plus préférée, d'environ 20 à 65 %, en masse par rapport à la masse totale de la composition.

Au sens de la présente description, la "polyamine aromatique" comporte dans sa molécule au moins 2 groupes amino primaires. Elle est de préférence encombrée, c'est-à-dire qu'elle contient au moins un substituant alcoyle ayant de 1 à 12 atomes de carbone situé en alpha de l'un des groupes amino.

Les polymères thermoplastiques les plus souvent utilisés sont les polysulfones et les polyétherimides.

Le terme "polysulfone" peut générer une ambiguïté. En effet, le premier polymère d'importance commerciale dont le motif de base contient un groupe sulfone - SO₂- est le polymère commercialisé par la société AMOCO sous l'appellation UDEL. De ce fait, cette polysulfone particulière reçoit souvent l'appellation générique de polysulfone. Au sens de la présente description, le terme "polysulfone" recouvre le sens générique, et n'a pas uniquement le sens limitatif de la polysulfone de type UDEL.

Les polysulfones utilisées dans les compositions de polymères de l'invention sont de préférence des polysulfones aromatiques et, de façon encore plus préférée, les polysulfones de type UDEL, les polyéther-sulfones de type polysulfones RADEL A, commercialisées par la société AMOCO, et les polyphénylène-sulfones de type polysulfones RADEL R, également commercialisées par la société AMOCO.

Les polyétherimides utilisés dans les compositions de polymères de l'invention sont de préférence les polyétherimides de type ULTEM, commercialisés par la société General Electric Plastics.

Ces polymères thermoplastiques peuvent être utilisés seuls, en mélanges entre eux, ou encore en mélanges avec d'autres polymères, comme par exemple des polyphénylène-éthers, des polyéthercétones aromatiques ou des polysulfures de phénylène. Dans les compositions de polymères selon la présente invention qui contiennent des polyphénylène-éthers, ceux-ci sont présents en une teneur qui représente environ 5 à 98 % en masse par rapport à la masse totale des polymères thermoplastiques. Dans les compositions de polymères selon la présente invention qui contiennent des polyéthercétones aromatiques, celles-ci sont présentes en une teneur qui représente environ 1 à 50 % en masse par rapport à la masse totale des polymères thermoplastiques. Dans les compositions de polymères selon la présente invention qui contiennent des polysulfures de phénylène, ceux-ci sont présents en une teneur qui représente environ 1 à 50 % en masse par rapport à la masse totale des polymères thermoplastiques.

Les résines époxydes modifiées par au moins une polyamine aromatique, de préférence encombrée, utilisées dans les compositions de polymères selon la présente invention sont des résines époxydes formées à partir d'au moins un polyépoxyde contenant dans sa molécule au moins deux groupes époxydes et d'au moins une polyamine aromatique de préférence encombrée, le rapport molaire de l'amine à l'époxyde étant tel que, à chaque groupe amino, il corresponde de 1,6 à 2,6 groupes époxydes.

Les polyamines aromatiques préférées sont choisies en raison de leur faible réactivité et aussi en raison de leur caractère non toxique.

La résine époxyde peut être choisie dans le groupe formé par les résines commerciales suivantes : la résine diglycidyléther du bis-phénol-A ou du bis-phénol-F, la résine de bis-phénol formol, la résine phénol-novolaque, les résines cycloaliphatiques, les résines tri- ou tétrafonctionnelles, les résines formées à partir de triglycidyléther-isocyanurate et/ou de triglycidyléther-cyanurate et/ou de triglycidyl-cyanurate et/ou de triglycidyl-isocyanurate ou les mélanges d'au moins deux de ces résines.

Les résines époxydes obtenues à partir de composés époxydés cités dans le brevet US-A-4 921 047 sont également utilisables dans le cadre de la présente invention.

Parmi les polyamines aromatiques utilisées dans les compositions de polymères selon la présente invention, on peut considérer une première série d'amines aromatiques comportant un seul noyau aromatique comme par exemple le 3,5-diéthyl-2,4-diaminotoluène, le 3,5-diéthyl-2,6-diaminotoluène et les mélanges de ces deux isomères. On utilise le plus souvent un mélange de ces deux isomères, que l'on dénomme généralement DETDA.

Dans une deuxième série d'amines utilisées dans la présente invention, on considère les amines comportant au moins deux noyaux aromatiques, ces deux noyaux aromatiques étant généralement reliés l'un à l'autre par un reste hydrocarboné bivalent, linéaire ou ramifié, comportant de 1 à 18 atomes de carbone. Ces deux noyaux aromatiques sont soit reliés par un groupe alcoylène bivalent, soit reliés l'un à l'autre par un reste hydrocarboné bivalent linéaire ou ramifié ayant de 6 à 18 atomes de carbone et comportant un noyau aromatique.

La polyamine aromatique peut aussi comporter au moins un substituant choisi dans le groupe formé par le fluor, l'iode, le brome et le chlore. Elle comporte de préférence au moins deux substituants alcoyles, chacun étant en alpha de part et d'autre d'un groupe amino.

Dans le cas où les deux noyaux aromatiques sont reliés par un reste alcoylène bivalent, ce reste sera de préférence un groupe méthylidène non substitué, ou substitué par au moins un radical choisi parmi les radicaux alcoyles et les radicaux halogénoalcoyles ayant de 1 à 3 atomes de carbone. Par exemple, ce reste alcoylène sera choisi dans le groupe formé par le groupe méthylidène, le groupe isopropylidène, les groupes halogénoisopropylidènes, et le groupe hexafluoroisopropylidène. Dans ce cas, l'amine est de préférence choisie dans le groupe formé par :
- la 4,4'-méthylène-bis(2,6-diméthylaniline) ou M-DMA ;
- la 4,4'-méthylène-bis(2-isopropyl-6-méthyl-aniline) ou M-MIPA ;
- la 4,4'-méthylène-bis(2,6-diéthylaniline) ou M-DEA ;
- la 4,4'-méthylène-bis(2,6-diisopropylaniline) ou M-DIPA ; et
- la 4,4'-méthylène-bis(3-chloro-2,6-diéthylaniline) ou M-CDEA.

Parmi ces amines, la 4,4'-méthylène-bis(2,6-diéthylaniline) et la 4,4'-méthylène-bis(3-chloro-2,6-diéthylaniline) présentent un intérêt particulier.

Dans le cas où l'amine comporte deux noyaux aromatiques qui sont reliés l'un à l'autre par un reste hydrocarboné bivalent substitué ou non substitué ayant de 6 à 18 atomes de carbone et comportant un noyau aromatique, elle sera de préférence choisie dans le groupe formé par :
- la 4,4'-(phénylène-diisopropyl)-bis(2,6-diméthyl-aniline) ;
- la 4,4'-(phénylène-diisopropyl)-bis(2,6-diéthyl-aniline) ;
- la 4,4'-(phénylène-diisopropyl)-bis(2,6-dipropyl-aniline) ;
- la 4,4'-(phénylène-diisopropyl)-bis(2,6-diisopropyl-aniline) ;
- la 4,4'-(phénylène-diisopropyl)-bis(2,6-diméthyl-3-chloro-aniline) ;
- la 4,4'-(phénylène-diisopropyl)-bis(2,6-diéthyl-3-chloro-aniline) ;
- la 4,4'-(phénylène-diisopropyl)-bis(2,6-dipropyl-3-chloro-aniline) ;
- la 4,4'-(phénylène-diisopropyl)-bis(2,6-diisopropyl-3-chloro-aniline) ;
- la 3,3'-(phénylène-diisopropyl)-bis(2,6-diméthyl-aniline) ;
- la 3,3'-(phénylène-diisopropyl)-bis(2,6-diéthyl-aniline) ;
- la 3,3'-(phénylène-diisopropyl)-bis(2,6-dipropyl-aniline) ;
- la 3,3'-(phénylène-diisopropyl)-bis(2,6-diméthyl-3-chloro-aniline) ;
- la 3,3'-(phénylène-diisopropyl)-bis(2,6-diéthyl-3-chloro-aniline) ;
- la 3,3'-(phénylène-diisopropyl)-bis(2,6-dipropyl-3-chloro-aniline) ;
- la 3,3'-(phénylène-diisopropyl)-bis(2,6-diisopropyl-aniline) ; et
- la 3,3'-(phénylène-diisopropyl)-bis(2,6-diisopropyl-3-chloro-aniline).

Les compostions de polymères selon la présente invention peuvent aussi contenir des catalyseurs actifs dans la réaction entre les résines époxydes et les polyamines aromatiques encombrées. Les catalyseurs actifs les plus souvent utilisés sont les imidazoles, les amines tertiaires et des complexes à base de bore trifluoré. On peut aussi ajouter des additifs choisis dans le groupe formé par les antioxydants, les pigments, les promoteurs d'adhérence, les stabilisants à la chaleur, ainsi que des charges organiques, minérales ou métalliques.

La présente invention concerne aussi la synthèse de compositions de polymères contenant au moins un polymère thermoplastique, de préférence amorphe, et au moins une résine époxyde modifiée par au moins une polyamine aromatique. La synthèse est effectuée en général sans solvant, à l'état fondu, à une température d'environ 100 à 250 °C et de préférence d'environ 150 à 200 °C par mise en contact des réactifs en des proportions convenables afin d'obtenir une composition finale ayant de préférence, une teneur en polymère thermoplastique d'environ 15 à 98 % en masse et, de façon encore plus préférée, d'environ 35 à 80 % en masse, et une teneur en résine époxyde modifiée d'environ 2 à 85 % en masse et, de façon encore plus préférée, d'environ 20 à 65% en masse par rapport à la masse totale de la composition.

La synthèse selon la présente invention peut être effectuée au moyen de tous types de mélangeurs ; on utilise de préférence une extrudeuse double-vis.

Les résines époxydes, les polyamines aromatiques et les additifs éventuels peuvent être introduits dans le mélangeur sous la forme d'un pré-mélange, auquel on ajoute le polymère thermoplastique. On peut aussi introduire isolément chaque réactif dans le mélangeur par des zones d'entrée différentes ou par une seule zone d'entrée. On ne sortirait pas du cadre de la présente invention en effectuant dans un premier temps le mélange des polymères thermoplastiques et des résines époxydes, puis en ajoutant ensuite l'agent durcisseur qu'est la polyamine aromatique. On peut même prévoir d'introduire la polyamine dans le mélangeur dans une zone proche de la zone de récupération de la composition de polymères.

Une fois le mélange effectué, la composition de polymères est mise en forme, puis, de préférence, on la soumet à un recuit. Ce recuit consiste en général à porter la composition à une température d'environ 200 à 250 °C par exemple pendant une durée d'environ 10 minutes à 12 heures. Il est de préférence effectué au moyen d'une étuve.

Les propriétés des compositions selon la présente invention, notamment leurs propriétés d'adhérence, sont de l'ordre de celles requises pour des utilisations les plus exigeantes notamment pour des utilisations du domaine de l'aéronautique.

D'autre part, ces compositions présentent une bonne tenue à l'eau de mer et les mesures effectuées sur des compositions qui ont subi un vieillissement accéléré montrent que ces compositions ont été très peu altérées par ce vieillissement.

Ces compositions ont des utilisations dans le domaine des revêtements de surfaces notamment de canalisations et plus particulièrement le revêtement des pipelines ou dans celui des matrices de matériaux composites. On peut aussi les utiliser pour l'obtention d'adhésifs et de mastics, notamment destinés à des collages pour les jonctions des pipelines et pour la réhabilitation de puits pétroliers ou géothermiques ou plus généralement de toutes excavations.

Les exemples qui suivent illustrent l'invention sans en limiter la portée.

Les compositions de polymères des exemples suivants sont préparées au moyen d'une extrudeuse bivis de la société CLEXTRAL, cette extrudeuse comprenant plusieurs niveaux d'introduction des réactifs à mélanger.

Pour ces exemples, on effectue au préalable le mélange de la résine époxyde et de la polyamine aromatique ; ce mélange recevra dans la suite du texte l'appellation de "pré-mélange". On introduit les polymères thermoplastiques par une zone d'entrée et le pré-mélange par une autre zone d'entrée. Le débit de pré-mélange étant constant, on introduit ce pré-mélange au moyen d'une pompe à engrenage. Par contre, les polymères thermoplastiques sont introduits au moyen d'un doseur pondéral qui permet de faire varier le débit de polymères thermoplastiques et ainsi d'obtenir des compositions de polymères avec des rapports résines modifiées/polymères thermoplastiques différents.

Les polymères thermoplastiques sont introduits dans une zone d'entrée de l'extrudeuse située à l'extrémité opposée à la zone de récupération de la composition de polymères. Dans cette zone d'entrée, la température est de 100 °C. Ils sont ensuite entraînés dans une deuxième zone où la température est de 150 °C et dans laquelle on introduit le pré-mélange. Ces réactifs sont ensuite entraînés par l'extrudeuse double-vis, la température à l'intérieur de cette extrudeuse augmentant progressivement pour atteindre 185 °C en sortie d'extrudeuse.

### EXEMPLE 1

Dans cet exemple, des mélanges de compositions de polymères comprenant un polyétherimide et une résine époxyde modifiée ont été préparés.

La résine époxyde modifiée comprend 8,016 kg de diglycidyléther du bis-phénol-A (DGEBA), commercialisée sous la référence LY556 par la société CIBA-GEIGY et 3,984 kg de 4,4'-méthylène-bis(3-chloro-2,6-diéthylaniline) (MCDEA), commercialisée par la société LONZA.

Avant son introduction dans l'extrudeuse, ce mélange est chauffé à 80 °C sous agitation. On a mesuré l'avancement de réaction de ce mélange par chromatographie d'exclusion de taille. La réactivité est très faible 5 heures à 60 °C conduisent à un avancement de réaction de 1 %.

Le polyétherimide utilisé est commercialisé par la société General Electric Plastics sous la référence ULTEM 1000, sa masse moléculaire moyenne en nombre est de 26 000 g/mol et sa granulométrie est de 300 micromètres. Avant son introduction dans l'extrudeuse, le polyétherimide est maintenu à l'étuve à 120 °C pendant 2 heures.

La résine époxyde modifiée est introduite dans l'extrudeuse par une pompe à engrenage au débit constant de 2 kg/h. Le polyétherimide est introduit au moyen d'un doseur pondéral au débit de 4,75 kg/h, pour obtenir une composition contenant 30 % en masse de résine époxyde modifiée, puis au débit de 2,00 kg/h, pour obtenir une composition contenant 50 % en masse de résine époxyde modifiée, enfin au débit de 1,30 kg/h pour obtenir une composition contenant 60 % en masse de résine époxyde modifiée, ces pourcentages de résine époxyde modifiée étant calculés par rapport à la composition totale.

En sortie d'extrudeuse, on obtient des mélanges homogènes, la conversion en fonctions réactives époxydes étant inférieure à 10 %.

Après extrusion, afin d'effectuer des mesures d'adhérence par le test de rupture en traction-cisaillement, ces compositions ont été déposées sur acier à une température qui correspond à leur température de mise en oeuvre - ces températures sont consignées dans le tableau 1 a -, puis portées à recuit à 220 °C pendant une heure.

D'autre part, ces compositions ont été pressées en moule, puis portées à recuit à 220 °C pendant une heure de manière à les façonner sous forme d'éprouvettes en vue de déterminer leurs propriétés thermomécaniques.

Des mesures d'adhérence à l'acier, du comportement thermomécanique, de la tenue à l'eau de mer et du comportement en vieillissement des différentes compositions ont été effectuées.

Les propriétés d'adhérence des différentes compositions ont été déterminées par la méthode de rupture en traction-cisaillement (ASTM D1002). Pour déterminer l'adhérence, des éprouvettes en acier, préalablement décapées avec une brosse en acier inoxydable tournant à grande vitesse, sont collées. La surface de collage est de 25,4.10⁻³ m x 12,7.10⁻³ m et l'épaisseur du joint de colle est de 125 micromètres. Le collage est effectué par simple contact à une température qui correspond pour chaque composition à sa température de mise en oeuvre - ces températures sont consignées dans le tableau 1 a -, puis elles sont portées à recuit pendant 1 heure à 220 °C.

Ces tests d'adhérence par la méthode de rupture en traction-cisaillement ont été effectués avec un appareil commercialisé par la société INSTRON (INSTRON-1175), équipé d'une tête de mesure de 100 kN (kiloNewton), avec une vitesse de traverse de 10⁻³ m/min.

Les exemples 1.2, 1.3 et 1.4 du tableau 1a sont conformes à l'invention, l'exemple 1.1 est un exemple comparatif, la composition de cet exemple 1.1 ne comprend pas de résine époxyde modifiée, elle contient uniquement un polyétherimide ULTEM 1000. Sur ces différentes compositions, on a déterminé la température de mise en oeuvre, puis la charge maximale En rapportant cette dernière valeur à la surface de collage, on déduit la contrainte à la rupture en traction-cisaillement.

**TABLEAU 1a**

| Exemples | 1.1(comparatif) | 1.2( conforme) | 1.3( conforme) | 1.4( conforme) |
|---|---|---|---|---|
| Résine époxyde modifiée (% en masse par rapport à la composition totale) | 0 | 30 | 50 | 60 |
| Température de mise en oeuvre (°C) | 320 | 230 | 210 | 200 |
| Charge maximale (kiloNewton) | 6,1 | 6,5 | 6,8 | 7,4 |
| Contrainte à la rupture (MPa) | 19 | 20 | 21 | 23 |

De cette première série de résultats, on note que les compositions selon la présente invention sont mises en oeuvre à une température inférieure à 250 °C. Les contraintes à la rupture en traction-cisaillement de ces compositions sont très bonnes : elles sont toutes au moins égales à 20 Mpa.

D'autre part, la perte d'adhérence après 6 mois à 150 °C sous air est faible. La valeur de contrainte à la rupture en traction-cisaillement mesurée sur la composition contenant 30 % de résine époxyde modifiée passe alors de 20 MPa à 17 MPa.

Les propriétés thermomécaniques des compositions de polymères ont été déterminées par une analyse DMTA (Dynamic Mechanical Thermal Analysis), en simple encastrement. Pour effectuer les mesures, les différentes compositions ont été moulées sous forme de plaques de 2.10⁻³ m d'épaisseur sous une pression de 5 MPa, puis ces moulages ont été portés à 220 °C pendant 1 heure. Les valeurs du module d'élasticité et de la tangente à l'angle de perte sont mesurées en fonction de la température à une fréquence de 1 Hz au moyen d'un appareil DMTA de la société Polymer Laboratories.

Les températures de transition vitreuse (Tg) et les modules d'élasticité E' à 25 °C, à 150 °C et à 175 °C ont été mesurés sur les compositions définies dans le tableau 1a. Ces valeurs sont consignées dans le tableau 1b.

**TABLEAU 1b**

| Exemples | 1.1(comparatif) | 1.2( conforme) | 1.3( conforme) | 1.4( conforme) |
|---|---|---|---|---|
| Tg en °C | 220 | 218 | 215 | 215 |
| Module E' à 25°C en MPa | 1600 | 1600 | 1000 | 1250 |
| Module E' à 150°C en MPa | 1250 | 800 | 550 | 800 |
| Module E' à 175°C en MPa | 1200 | 600 | 350 | 300 |

Les modules d'élasticité traduisent la rigidité des matériaux. D'après ces résultats, ces compositions de polymères présentent jusqu'à 150 °C une rigidité comparable à celle du polyétherimide (exemple 1.1). A 175 °C, elles présentent encore une rigidité suffisante pour une application en revêtement.

Une série de tests de la tenue à l'eau de mer a aussi été effectuée. Les compositions des exemples 1.1, 1.3 et 1.4 ont été moulées sous forme de plaques de 50.10⁻³ m x 50.10⁻³ m x 2.10⁻³ m. Ces échantillons ont été immergés dans de l'eau de mer synthétique contenue dans un réacteur étanche, chauffé à 160 °C, à une pression absolue de 0,62 MPa. Des mesures d'absorption de l'eau ont été réalisées en déterminant la variation de masse des échantillons après 3 mois d'immersion. Les résultats sont consignés dans le tableau 1c.

**TABLEAU 1c**

| Exemples | 1.1(comparatif) | 1.3( conforme) | 1.4( conforme) |
|---|---|---|---|
| Reprise d'eau (% en poids) | 4,4 | 3,6 | 3,2 |
| Déformation | importante | faible | aucune |

La reprise d'eau des compositions conformes à l'invention est faible. L'augmentation de la quantité de résine époxyde modifiée diminue la reprise d'eau. D'autre part, ces compositions subissent une faible ou aucune déformation. Après 3 mois d'immersion, les éprouvettes présentent un revêtement presque complètement inaltéré.

### EXEMPLE 2

Dans cet exemple, des mélanges de compositions de polymères comprenant une polyphénylènesulfone et une résine époxyde modifiée ont été préparés.

La résine époxyde modifiée comprend 8,016 kg de diglycidyléther du bis-phénol-A (DGEBA), commercialisée sous la référence LY556 par la société CIBA-GEIGY et 3,984 kg de MCDEA, commercialisée par la société LONZA.

Avant son introduction dans l'extrudeuse, ce mélange est chauffé à 80 °C sous agitation. On a mesuré l'avancement de réaction de ce mélange par chromatographie d'exclusion de taille. La réactivité est très faible : 5 heures à 60 °C conduisent à un avancement de réaction de 1 %.

La polyphénylènesulfone utilisée est le RADEL R, commercialisé par la société AMOCO.

La résine époxyde modifiée est introduite dans l'extrudeuse par une pompe à engrenage au débit constant de 2 kg/h. La polyphénylènesulfone est introduite au moyen d'un doseur pondéral au débit de 2,00 kg/h, pour obtenir une composition contenant 50 % en masse de résine époxyde modifiée, puis au débit de 1,10 kg/h, pour obtenir une composition contenant 65 % en masse de résine époxyde modifiée. Ces pourcentages de résine époxyde modifiée sont calculés par rapport à la composition totale.

En sortie d'extrudeuse on obtient des mélanges homogènes, la conversion en fonctions réactives époxydes étant inférieure à 10 %.

Après extrusion, afin d'effectuer des mesures d'adhérence par le test de rupture en traction-cisaillement, ces compositions ont été déposées sur acier à une température qui correspond à leur température de mise en oeuvre - ces températures sont consignées dans le tableau 2a -, puis portées à recuit à 220 °C pendant une heure.

Pour déterminer leurs propriétés thermomécaniques, ces compositions ont été pressées en moule, puis portées à recuit à 220 °C pendant une heure, de manière à les façonner sous forme d'éprouvettes.

Les propriétés d'adhérence des différentes compositions ont été déterminées par la méthode ASTM D1002 selon le même processus que dans l'exemple 1.

Les exemples 2.2 et 2.3 du tableau suivant sont conformes à l'invention, l'exemple 2.1 est un exemple comparatif dans lequel la composition ne comprend pas de résine époxyde modifiée, mais contient uniquement une polyphénylènesulfone de type RADEL R. Sur ces différentes compositions, on a déterminé la température de mise en oeuvre, puis la charge maximale. En rapportant cette dernière valeur à la surface de collage, on déduit la contrainte à la rupture en traction-cisaillement.

**TABLEAU 2a**

| Exemples | 2.1(comparatif) | 2.2( conforme) | 2.3( conforme) |
|---|---|---|---|
| Résine époxyde modifiée (% en masse par rapport à la composition totale) | 0 | 50 | 65 |
| Température de mise en oeuvre (°C) | 320 | 190 | 170 |
| Charge maximale (kiloNewton) | 6,5 | 6,1 | 6,8 |
| Contrainte à la rupture (MPa) | 20 | 19 | 21 |

De cette première série de résultats, on note que les compositions selon la présente invention sont mises en oeuvre à une température inférieure à 200 °C. Les contraintes à la rupture en traction-cisaillement de ces compositions sont très bonnes : elles sont toutes au moins égales à 19 MPa.

Les propriétés thermomécaniques des compositions de polymères ont été déterminées par une analyse DMTA en simple encastrement selon le même processus que dans l'exemple 1.

Les températures de transition vitreuse (Tg) et les modules d'élasticité E' à 25 °C, à 150 °C et à 175 °C ont été mesurés sur les compositions définies dans le tableau 2a, ces valeurs sont consignées dans le tableau 2b.

**TABLEAU 2b**

| Exemples | 2.1(comparatif) | 2.2( conforme) | 2.3( conforme) |
|---|---|---|---|
| Tg en °C | 220 | 205 | 200 |
| Module E' à 25°C en MPa | 1200 | 1100 | 1300 |
| Module E' à 150°C en MPa | 1050 | 850 | 850 |
| Module E' à 175°C en MPa | 1000 | 700 | 650 |

Les modules d'élasticité traduisent la rigidité des matériaux. D'après ces résultats, même lorsqu'on les porte à une température assez élevée, ces compositions de polymères présentent une rigidité suffisante pour une application en revêtement.

Une série de tests de la tenue à l'eau de mer a aussi été effectuée. Les compositions des exemples 2.1 et 2.2 ont été moulées sous forme de plaques de 50.10⁻³ m x 50.10⁻³ m x 2.10⁻³ m. Ces échantillons ont été immergés dans de l'eau de mer synthétique contenue dans un réacteur étanche, chauffé à 160 °C, à une pression absolue de 0,62 MPa. Des mesures d'absorption de l'eau ont été réalisées en déterminant la variation de masse des échantillons après 3 mois d'immersion.

**TABLEAU 2c**

| Exemples | 2.1(comparatif) | 2.2 (conforme) |
|---|---|---|
| Reprise d'eau (% en poids) | 2,6 | 2 |
| Déformation | aucune | aucune |

La reprise d'eau de la composition conforme à l'invention est faible. L'augmentation de la quantité de résine époxyde modifiée diminue la reprise à l'eau, cette composition ne subit pas de déformation. Après 3 mois d'immersion, l'éprouvette présente un revêtement inaltéré.

### EXEMPLE 3

Dans cet exemple, des mélanges de compositions de polymères comprenant une polyétherimide, un polyphénylène-éther et une résine époxyde modifiée ont été préparés.

La résine époxyde modifiée comprend 8,016 kg de diglycidyléther du bis-phénol-A (DGEBA), commercialisée sous la référence LY556 par la société CIBA-GEIGY et 3,984 kg de MCDEA, commercialisée par la société LONZA.

Avant son introduction dans l'extrudeuse, ce mélange est chauffé à 80 °C sous agitation. On a mesuré l'avancement de réaction de ce mélange par chromatographie d'exclusion de taille. La réactivité est très faible : 5 heures à 60 °C conduisent à un avancement de réaction de 1 %.

Le polyétherimide utilisé est commercialisé par la société General Electric Plastics sous la référence ULTEM 1000. Ce polyétherimide est celui utilisé dans l'exemple 1 ci-dessus. Le polyphénylène-éther utilisé est commercialisé par la société General Electric Plastics sous la référence PPE 800 ; sa masse moléculaire moyenne en nombre est de 12 000 g/mol.

La résine époxyde modifiée est introduite dans l'extrudeuse par une pompe à engrenage au débit constant de 2 kg/h. Les polymères thermoplastiques (polyétherimide et polyphénylène-éther) sont introduits par la même zone d'introduction, la quantité de polyétherimide étant égale à la quantité de polyphénylène-éther. Ces deux polymères sont introduits au moyen d'un doseur pondéral au débit total de 2,00 kg/h, pour obtenir une composition contenant 50 % en masse de résine époxyde modifiée, puis au débit de 1 kg/h, pour obtenir une composition contenant 67 % en masse de résine époxyde modifiée - ces pourcentages de résine époxyde modifiée étant calculés par rapport à la composition totale.

En sortie d'extrudeuse, on obtient des mélanges homogènes, la conversion en fonctions réactives époxydes étant inférieure à 10 %.

Après extrusion, afin d'effectuer des mesures d'adhérence par le test de rupture en traction-cisaillement, ces compositions ont été déposées sur acier à une température qui correspond à leur température de mise en oeuvre - ces températures sont consignées dans le tableau 3a -, puis portées à recuit à 220 °C pendant une heure.

Pour déterminer leurs propriétés thermomécaniques, ces compositions ont été pressées en moule, puis portées à recuit à 220 °C pendant une heure, de manière à les façonner sous forme d'éprouvettes.

Les propriétés d'adhérence des différentes compositions ont été déterminées par la méthode ASTM D1002 selon le même processus que dans l'exemple 1.

Les exemples 3.2 et 3.3 du tableau suivant sont conformes à l'invention. L'exemple 3.1 est un exemple comparatif dans lequel la composition ne comprend pas de résine époxyde modifiée, mais contient 50 % en masse de polyphénylène-éther de type PPE 800 et 50 % en masse de polyétherimide de type ULTEM 1000. Sur ces différentes compositions, on a déterminé la température de mise en oeuvre, puis la charge maximale. En rapportant cette dernière valeur à la surface de collage, on déduit la contrainte à la rupture en traction-cisaillement.

**TABLEAU 3a**

| Exemples | 3.1(comparatif) | 3.2( conforme) | 3.3( conforme) |
|---|---|---|---|
| Résine époxyde modifiée (% en masse par rapport à la composition totale) | 0 | 50 | 67 |
| Température de mise en oeuvre (°C) | 300 | 220 | 160 |
| Charge maximale (kiloNewton) | 2,2 | 7,4 | 7,7 |
| Contrainte à la rupture (MPa) | 7 | 23 | 24 |

De cette première série de résultats, on note que les compositions selon la présente invention sont mises en oeuvre à une température inférieure à 250 °C. Les contraintes à la rupture en traction-cisaillement de ces compositions sont très bonnes : elles sont toutes au moins égales à 23 MPa.

Les propriétés thermomécaniques des compositions de polymères ont été déterminées par une analyse DMTA en simple encastrement selon le même processus que dans l'exemple 1.

Les températures de transition vitreuse (Tg) et les modules d'élasticité E' à 25 °C, à 150 °C et à 175 °C ont été mesurés sur les compositions définies dans le tableau 3a. Ces valeurs sont consignées dans le tableau 3b.

**TABLEAU 3b**

| Exemples | 3.1(comparatif) | 3.2( conforme) | 3.3( conforme) |
|---|---|---|---|
| Tg en °C | 220 | 215 | 210 |
| Module E' à 25°C en MPa | 1100 | 1100 | 1100 |
| Module E' à 150°C en MPa | 1050 | 900 | 700 |
| Module E' à 175°C en MPa | 900 | 600 | 200 |

Les modules d'élasticité traduisent la rigidité des matériaux. D'après ces résultats, même lorsqu'on les porte à une température assez élevée, ces compositions de polymères présentent une rigidité suffisante pour une application en revêtement.

Les exemples 1, 2 et 3 mettent en évidence la possibilité de synthétiser des compositions de polymères à partir de différents polymères thermoplastiques et en choisissant des rapports de résines modifiées/polymères thermoplastiques dans une gamme assez large, tout en respectant une température de mise en oeuvre du dépôt de ces polymères sur l'acier inférieure à 250 °C. Ces compositions de polymères présentent une bonne adhérence à l'acier - dans ces exemples la contrainte à la rupture en traction-cisaillement est d'au moins 19 MPa -, ainsi qu'une rigidité à haute température (175 °C) suffisante pour une application en revêtement.

## Revendications

1. Composition de polymères **caractérisée en ce qu'**elle comprend au moins un polymère thermoplastique choisi dans le groupe formé par les polyétherimides et les polysulfones et au moins une résine époxyde modifiée par au moins une polyamine aromatique, la résine époxyde étant formée à partir d'au moins un polyépoxyde contenant dans sa molécule au moins 2 groupes époxydes et la polyamine aromatique comportant dans sa molécule au moins 2 groupes amino primaires, le rapport molaire de la polyamine à l'époxyde étant tel que, à chaque groupe amino, il corresponde de 1,6 à 2,6 groupes époxydes, la teneur en polymère thermoplastique étant de 33 à 98 % en masse par rapport à la masse totale de la composition de polymères et la teneur en résine époxyde modifiée par au moins une polyamine aromatique est d'environ 2 à 67 % en masse par rapport à la masse totale de la composition de polymères.

2. Composition de polymères selon la revendication 1 **caractérisée en ce que** la polyamine aromatique comporte au moins un substituant alcoyle ayant de 1 à 12 atomes de carbone situé en alpha de l'un des groupes amino.

3. Composition de polymères selon l'une des revendications 1 ou 2 **caractérisée en ce que** la teneur en polymères thermoplastiques est d'environ 35 à 80 % en masse par rapport à la masse totale de la composition de polymères et la teneur en résine époxyde modifiée par au moins une polyamine aromatique est d'environ 20 à 65 % en masse par rapport à la masse totale de la composition de polymères.

4. Composition de polymères selon l'une des revendications 1 à 3 **caractérisée en ce que** la polyamine aromatique utilisée est choisie dans le groupe formé par les amines aromatiques comportant un seul noyau aromatique et les amines aromatiques comportant au moins deux noyaux aromatiques, les deux noyaux aromatiques étant reliés l'un à l'autre par un reste hydrocarboné bivalent linéaire ou ramifié comportant de 1 à 18 atomes de carbone.

5. Composition de polymères selon l'une des revendications 1 à 4 **caractérisée en ce qu'**elle comprend au moins un polyphénylène-éther en une teneur d'environ 5 à 98 % en masse par rapport à la masse totale des polymères thermoplastiques.

6. Composition de polymères selon l'une des revendications 1 à 5 **caractérisée en ce qu'**elle comprend au moins un polysulfure de phénylène en une teneur d'environ 1 à 50 % en masse par rapport à la masse totale des polymères thermoplastiques.

7. Composition de polymères selon l'une des revendications 1 à 6 **caractérisée en ce qu'**elle comprend au moins une polyéthercétone aromatique en une teneur d'environ 1 à 50 % en masse par rapport à la masse totale des polymères thermoplastiques.

8. Composition de polymères selon l'une des revendications 1 à 7 **caractérisée en ce qu'**elle comprend au moins un additif choisi dans le groupe formé par les catalyseurs actifs dans la réaction entre les résines époxydes et les amines encombrées, les antioxydants, les pigments, les promoteurs d'adhérence, les stabilisateurs à la chaleur, les charges organiques, minérales ou métalliques.

9. Procédé de synthèse d'une composition de polymères selon l'une des revendications 1 à 8 **caractérisé en ce qu'**il est effectué par mise en contact d'au moins un polymère thermoplastique choisi dans le groupe formé par les polyétherimides et les polysulfones et d'au moins une résine époxyde modifiée par au moins une polyamine aromatique, sans solvant, à l'état fondu à une température d'environ 100°C à 250°C.

10. Utilisation d'une composition de polymères selon l'une des revendications 1 à 8 ou d'une composition de polymères obtenue par le procédé selon la revendication 9 pour l'obtention de pré-imprégnés pour la fabrication de matériaux composites.

11. Utilisation d'une composition de polymères selon l'une des revendications 1 à 8 ou d'une composition de polymères obtenue par le procédé selon la revendication 9 pour l'obtention d'adhésifs et de mastics.

## Patentansprüche

1. Polymerzusammensetzung, **dadurch gekennzeichnet, daß** sie wenigstens ein thermoplastisches Polymer ausgewählt aus der Gruppe der Polyetherimide und Polysulfone umfassen, und wenigstens ein Epoxydharz, modifiziert durch wenigstens ein aromatisches Polyamin, wobei das Epoxydharz gebildet wird ausgehend von wenigstens einem Polyepoxyd enthaltend wenigstens 2 Epoxygruppen und das aromatische Polyamin wenigstens 2 primäre Aminogruppen enthält, das molare Verhältnis von Polyamin zu Epoxyd liegt pro Amino-Gruppe bei 1,6 bis 2,6 Epoxyd-Gruppen, der Gehalt an thermoplastischem Polymer liegt zwischen 33 und 98 Gew. -% im Verhältnis zur Gesamtmasse der Polymerzusammensetzung und der Gehalt an, durch wenigstens ein aromatisches Polyamin modifiziertem, Epoxydharz liegt ungefähr bei 2 bis 67 Gew. -% im Verhältnis zur Gesamtmasse der Polymerzusammensetzung.

2. Polymerzusammensetzung gemäß Anspruch 1, **dadurch gekennzeichnet, dass** das aromatische Polyamin wenigstens einen Alkyl-Substituenten mit 1 bis 12 Kohlenstoffatomen in alpha Position zu einer der Aminogruppen trägt.

3. Polymerzusammensetzung gemäß einem der Ansprüche 1 oder 2, **dadurch gekennzeichnet, dass** der Gehalt an thermoplastischem Polymer ungefähr 35 bis 80 Gew. -% im Verhältnis zur Gesamtmasse der Polymerzusammensetzung beträgt und der Gehalt an mit wenigstens einem aromatischen Polyamin modifiziertem Epoxydharz ungefähr 20 bis 65 Gew. -% im Verhältnis zur Gesamtmasse der Polymerzusammensetzung beträgt.

4. Polymerzusammensetzung gemäß einem der Ansprüche 1 bis 3, **dadurch gekennzeichnet, dass** das verwendete aromatische Polyamin aus der Gruppe gewählt ist, die gebildet wird durch die aromatischen Polyamine mit einem einzigen aromatischen Ring und die aromatischen Polyamine mit wenigstens zwei aromatischen Ringen, wobei die zwei aromatischen Ringe miteinander über einen bivalenten linearen oder verzweigten Kohlenwasserstoffrest mit 1 bis 18 Kohlenstoffatomen verbunden sind.

5. Polymerzusammensetzung gemäß einem der Ansprüche 1 bis 4, **dadurch gekennzeichnet, dass** sie wenigstens einen Polyphenylen-Ether mit einem Gehalt von ungefähr 5 bis 98 Gew. -% im Verhältnis zur Gesamtmasse des thermoplastischen Polymers umfasst.

6. Polymerzusammensetzung gemäß einem der Ansprüche 1 bis 5, **dadurch gekennzeichnet, dass** sie wenigstens ein Phenylenpolysulfid mit einem Gehalt von ungefähr 1 bis 50 Gew. -% im Verhältnis zur Gesamtmasse des thermoplastischen Polymers umfasst.

7. Polymerzusammensetzung gemäß einem der Ansprüche 1 bis 6, **dadurch gekennzeichnet, dass** sie wenigstens ein aromatisches Polyetherketon mit einem Gehalt von ungefähr 1 bis 50 Gew. -% im Verhältnis zur Gesamtmasse des thermoplastischen Polymers umfasst.

8. Polymerzusammensetzung gemäß einem der Ansprüche 1 bis 7, **dadurch gekennzeichnet, dass** sie wenigstens ein Additiv umfasst, ausgewählt aus der Gruppe, die gebildet wird durch die Katalysatoren, die bei der Reaktion zwischen Expoxydharzen und den voluminösen Aminen aktiv sind, Antioxidantien, Pigmente, Haftvermittlern, Temperaturstabilisatoren, organische, mineralische oder metallische Beschickungen.

9. Verfahren zur Synthese einer Polymerzusammensetzung gemäß einem der Ansprüche 1 bis 8, **dadurch gekennzeichnet, dass** es durchgeführt wird mittels In-Kontakt-Bringen von wenigstens einem thermoplastischen Polymer ausgewählt aus der Gruppe, die gebildet wird durch Polyetherimide, Polysulfone, und wenigstens einem, durch ein aromatisches Polyamin modifiziertem Epoxydharz, ohne Lösungsmittel in einem geschmolzenen Zustand bei einer Temperatur von ungefähr 100°C bis 250°C.

10. Verwendung einer Polymerzusammensetzung gemäß einem der Ansprüche 1 bis 8 oder einer Polymerzusammensetzung, die nach dem Verfahren von Anspruch 9 erhalten wird, zur Erlangung von Vor-Imprägnaten zur Herstellung von Komposit-Materialien.

11. Verwendung einer Polymerzusammensetzung gemäß einem der Ansprüche 1 bis 8 oder einer Polymerzusammensetzung, die nach dem Verfahren von Anspruch 9 erhalten wird, zur Erlangung von Adhesiven und Bindemitteln.

## Claims

1. A polymer composition **characterized in that** it comprises at least one thermoplastic polymer selected from the group formed by polyetherimides and polysulphones and at least one epoxy resin modified with at least one aromatic polyamine, whereby the epoxy resin is formed from at least one polyepoxide containing in its molecule at least 2 epoxy groups and the aromatic polyamine contains in its molecule at least 2 primary amine groups, the mole ratio of the polyamine to the epoxy is such that 1.6 to 2.6 epoxy groups corresponds to each amine group, the content in thermoplastic polymer is 33 to 98% by weight with respect to the total weight of the polymer composition and the content in epoxy resin modified with at least one aromatic polyamine is about 2 to 67% by weight with respect to the total weight of the polymer composition.

2. A polymer composition according to claim 1, **characterized in that** the aromatic polyamine contains at least one alkyl substituent containing 1 to 12 carbon atoms located alpha to one of the amine groups.

3. A polymer composition according to claim 1 or 2, **characterized in that** the content of thermoplastic polymer is about 35% to 80% by weight with respect to the total polymer composition weight and the content of epoxy resin modified by at least one aromatic polyamine is about 20% to 65% by weight with respect to the total polymer composition weight.

4. A polymer composition according to anyone of claims 1 to 3, **characterized in that** the aromatic polyamine used is selected from the group formed by aromatic amines containing a single aromatic ring and aromatic amines containing at least two aromatic rings, whereby the two aromatic rings are connected to each other by a bivalent linear or branched hydrocarbon residue containing 1 to 18 carbon atoms.

5. A polymer composition according to anyone of claims 1 to 4 **characterized in that** it comprises at least one polyphenylene-ether at a content of about 5 to 98% by weight with respect to the total weight of the thermoplastic polymers.

6. A polymer composition according to anyone of claims 1 to 5 **characterized in that** it comprises at least one phenylene polysulphide at a content of about 1 to 50% by weight with respect to the total weight of the thermoplastic polymers.

7. A polymer composition according to anyone of claims 1 to 6 **characterized in that** it comprises at least one aromatic polyetherketone at a content of about 1 to 50% by weight with respect to the total weight of the thermoplastic polymers.

8. A polymer composition according to anyone of claims 1 to 7 **characterized in that** it comprises at least one additive selected from the group formed by catalysts active in the reaction between epoxy resins and sterically hindered amines, antioxidants, pigments, adhesion promoters, heat stabilisers, and organic, mineral or metallic fillers.

9. A process for synthesizing a polymer composition according to anyone of claims 1 to 8 **characterized in that** it is carried out by bringing at least one thermoplastic polymer selected from the group formed by polyetherimides and polysulphones into contact with at least one epoxy resin modified with at least one aromatic polyamine, without a solvent, in the molten state at a temperature of about 100°C. to 250°C.

10. The use of a polymer composition according to anyone of claims 1 to 8 or a polymer composition obtained by the process according to claim to 9 to produce of pre-impregnates for the production of composite materials.

11. The use of a polymer composition according to anyone of claims 1 to 8 or a polymer composition obtained by the process according to claim to 9 to produce adhesives and mastics.
